# EUROPEAN PATENT APPLICATION

(11) **EP 4 667 422 A1**
(43) Date of publication of application: **24.12.2025**
(21) Application number: 24183345.8
(22) Date of filing: 20.06.2024
(51) Int. Cl.: C02F 1/32, C02F 1/467, C02F 1/72, C02F 1/74, C02F 1/78, C02F 1/461

(54) **A PHOTOELECTROCATALYTIC REACTOR FOR SANITIZING WATER AND A METHOD FOR SANITIZING A WATER MASS**

(71) Applicant: Urtech Water S.L., 31013 Pamplona (ES)
(72) Inventor: LÓPEZ PALACIOS, Javier, 31013 Pamplona (ES); VALERIO NAVARRO, Alejandro, 31013 Pamplona (ES); GARCÍA ZABALA, Néstor, 31013 Pamplona (ES)
(74) Representative: Elion IP, S.L.

(57) **Abstract**

The disclosure refers to a photoelectrocatalytic reactor for sanitizing water that comprises a reaction chamber, an electrooxidation reactor arranged inside the reaction chamber and a UV light source. The electrooxidation reactor comprises a plurality of alternated laminar-shaped anodes and cathodes connected to a current source, wherein an outer side surface of a first outermost anode of the electrooxidation reactor is covered with titanium dioxide. The UV light source is located on a first side of the electrooxidation reactor and facing the outer side surface of the first outer outermost anode of the electrooxidation reactor, the first ultraviolet light source comprising UV light emitting diodes arranged. The electrooxidation reactor defines a first reaction volume in which electrooxidation is carried out and the UV light source and the outer side surface of the first outermost anode define a second reaction volume in which heterogeneous photocatalysis is carried out.

## Description

### TECHNICAL FIELD

The present invention refers generally to the field of water sanitization/disinfection and more particularly, to a photoelectrocatalytic (PEC) reactor for sanitizing water and to a method for sanitizing a water mass. The solution herein disclosed has multiple applications, such as, sanitizing water coming from washing, scalding and continuous pasteurization processes in food industry, sanitizing water coming from sterilization/cooling processes carried out in autoclaves in food industry, sterilization of cooling water in industrial processes, disinfection of drinking water, wastewater treatments, etc. The solution herein disclosed is able to operate with continuous flows of water, e.g., tap water with low conductivity that range from 150 to 350 µS, and at high water flow rates, e.g., between 3 and 20 m³/hour or more.

### BACKGROUND

With rising water quality standards, it is of great importance to develop processes that can efficiently remove pathogens and pollutants which are resistant to conventional water treatment methods. Some of these conventional methods for water treatment use great amounts of chemical products and have limitations in effectively removing certain types of organic compounds and microorganisms. For instance, chlorination can be ineffective in killing spores and bacteria such as clostridium, bacillus, legionella, pseudomonas and sphingomonas, among others, and can produce harmful byproducts and be ineffective against certain types of bacteria and viruses, while ozonation can be expensive and consume a lot of energy.

Advanced Oxidation Processes (AOPs) refer to a set of physical-chemical treatment procedures designed to remove organic (and sometimes inorganic) materials in water and wastewater by oxidation through reactions with hydroxyl radicals, superoxide radicals and other reactive oxygen species (ROS). These processes, that avoid using chemical compounds, include some well-known technologies such as ozonation, UV/H2O2, sonolysis, photocatalysis, etc.

Photocatalysis is a process to remove pollutants and microorganisms with the use of ultraviolet light and/or visible light. However, it has been observed that the efficiency of the photocatalytic process reduces drastically due to the recombination of the charge carriers (hole-electron pairs).

Photoelectrocatalysis (PEC) is another technology based on AOPs that is able to overcome the limitation of the conventional photocatalysis by immobilizing the photocatalyst on a conductive substrate which is used also as an electrode. The electric current provided to the conductive substrate increases the separation of the electron-hole pairs and prevents their recombination. The positively charged holes migrate to the photocatalyst surface where they directly oxidize the organic pollutant and the negatively charged electrons migrate to the counter electrode through the external circuit. As compared to photocatalysis, PEC increases the efficiency of the process, produces higher number of electron-holes pairs and avoids the need for catalyst recovery systems by having the photocatalyst immobilized.

To date, the existing PEC reactors are laboratory or small-scale reactors that only operate with high conductivity liquids, such as electrolytes with high salinity rates, and that only capable of treating small volumes of liquids in a static mode (i.e., they do not operate with continuous flows of the liquids to be treated). In addition, these prior art PEC reactors had short operating life spans mainly due to the rapid degradation of the photocatalyst which tends to degrade and break down over time from the substrate (electrode) on which it had previously been immobilized, especially when this substrate is subjected to high current densities (current densities above 150A/m³). The degradation of the photocatalyst over time significantly reduces the efficiency and efficacy of the PEC reactors even forcing to halt its operation to replace these electrodes with the photocatalyst every so often. This also implies an increase in the maintenance and operation costs and makes them unfeasible for applications in which large quantities of liquid in movement, for example, low-conductivity waters such as tap water, needs to be sanitized.

Hence, all these sanitization processes and systems of the state-of-the-art present low efficiency rates, limited scalability, and high maintenance and operation costs.

Therefore, there is a need in the art for PEC reactors for sanitizing water that are compact, modular, that avoid using biocidal chemical products, that are able to achieve better water and product quality without affecting the environment, which present high efficiency rates, that consume low amounts of power, that are able to operate with continuous flows of water with salinities below 1 gr/L and that able to withstand high current densities.

### DESCRIPTION

A first aspect of the present disclosure refers to a photoelectrocatalytic (PEC) reactor for sanitizing water. The PEC reactor combines electrochemical oxidation (electrooxidation) and photocatalysis techniques within the same reaction chamber, so the sanitization power of these technologies is simultaneously applied to the water mass flowing through the PEC reactor. The combination of these technologies also presents synergies that increase the overall disinfection power of the PEC reactor herein disclosed. In particular, this combination of technologies is able to increase the water disinfection rate in up to a 75% with respect the use of any of these technologies in an isolated manner. This increase in the disinfection rate provided by the PEC reactor herein disclosed is measured in terms of reduction of the chemical and biochemical oxygen demand (COD and BOD) when compared to a same mass of contaminated water.

The water to be sanitized may be wastewater coming from industrial or domestic uses. By way of example, this water may be the cooling water coming from cooling towers used to refrigerate some industrial processes or may be the water used to wash fruits, vegetables or other food products in industrial processes of the agri-food sector. Preferably, the water may be recirculated water. That is to say, water that is recirculated through the PEC reactor as many times as required to reach the required quality standard.

The PEC reactor comprises a reaction chamber that, in turn, comprises a water inlet and a water outlet. The reaction chamber is configured to receive the continuous flow of water to be sanitized. The water received at the reaction chamber is water having a conductivity between 150 and 10000 µS/cm, i.e., is water whose conductivity rate ranges from 150 µS/cm (low salinity rate), such as tap water, to 10000 µS/cm (high salinity rate) or even higher. The PEC reactor is configured to treat a continuous water flow at a rate between 3 and 20 m³/hour, preferably between 5 and 10 m³/hour. The PEC reactor further comprises an electrooxidation reactor arranged inside the reaction chamber. This electrooxidation reactor comprises a plurality of alternated laminar-shaped electrodes, in particular, anodes and cathodes, connected to an electrical current source. This electrical current source may be regulable to adjust the current being provided to the electrooxidation reactor and thus, to regulate its operation. The anodes are those electrodes of the electrooxidation reactor that may be connected to the positive terminal of the current source while the cathodes are those electrodes of the electrooxidation reactor that may be connected to the negative terminal of the current source. The PEC reactor is designed such that at least one of the outmost laminar-shaped electrodes of the plurality of alternated laminar-shaped electrodes is an anode or a cathode whose outer surface (i.e., the surface of the electrode oriented towards the inner face of the reactor chamber) is covered with titanium dioxide (TiO₂). The titanium dioxide has been previously deposited by a technique selected from a list comprising physical vapor deposition (PVD), SOL-GEL deposition, thermal spray deposition, chemical vapor deposition (CVD) and atomic layer deposition (ALD). Preferably, the titanium dioxide will be physical vapor deposited titanium dioxide. Titanium dioxide presents high chemical stability, low toxicity, high efficiency, low cost and high resistance to chemical corrosion and photo-corrosion. The titanium dioxide reacts with the UVA light generating highly reactive oxygen species, such as hydroxyl radicals and superoxide radicals, among others. The electrodes of the electrooxidation reactor are further configured to withstand current densities between 150 and 350 A/m³. These high current densities promote the electrooxidation and the photocatalytic processes that take place inside the reactor chamber.

By using one of the techniques selected from a list comprising PVD, SOL-GEL deposition, thermal spray deposition, CVD and ALD, to deposit the titanium dioxide on the outer face of the outmost laminar-shaped electrodes a stronger bonding between the titanium dioxide and the substrate material of the electrodes is created and a larger amount of titanium dioxide can be deposited on the same surface than with other state-of-the-art deposition techniques. Having a larger quantity of titanium dioxide deposited on the electrode increases the amount of reactive oxygen species generated and the decomposition rate of organic material in the water, which increases the efficiency of the photoelectrocatalysis process. The stronger bonding created between the titanium dioxide and the substrate material provides two additional advantages: 1) reduces the degradation rate of the titanium dioxide over time extending the operational life of the PEC reactor and reduces its operation and maintenance costs; and 2) the outmost laminar-shaped electrodes are capable of withstanding higher current densities, e.g., between 150-350 A/m³, which allows the PEC reactor to operate with waters having lower conductivity rates, e.g. conductivity rates between 150-350 µS/cm (although it may operate with waters having higher conductivity rates too), broadening its spectrum of use, allows increasing the generation of reactive oxygen species and the decomposition rate of organic material in water, and minimizing the recombination of the generated oxidizing species. All this contributes to increase the efficiency of the overall photoelectrocatalysis process. By using the PVD technique to deposit the titanium dioxide on the outer face of the outmost laminar-shaped electrodes more compact titanium dioxide layers can be deposited without the need of incorporating organic matrices and an optimal balance between mechanical and photocatalytic properties is provided.

The electrodes (anodes and cathodes) of the electrooxidation reactor may be sheets made of titanium. In particular, the anodes may be covered with a mixed metal oxide (MMO) such as ruthenium, iridium, ruthenium dioxide, iridium dioxide, gallium, wolframium, palladium, platinum, gallium oxide, wolframium oxide, palladium oxide, platinum oxide or a combination thereof, among many other materials. Ruthenium dioxide and iridium dioxide present good resistance to corrosion and its combination favors the generation of chlorine and thus, of stabilized hypochlorous acid, which has a high germicide rate. These anodes, which are made of titanium and covered with a thin layer of metal oxide, or a mixture of metal oxides, are known as Dimensionally Stable Anodes (DSA). Therefore, the electrooxidation reactor herein disclosed preferably comprises DSA. Alternatively, the anodes may be covered with boron-doped diamond (BDD) instead of MMO. BDD presents high reactivity for oxidating organic compounds, provides an inert surface with low adsorption properties, high stability against corrosion even in strongly acidic media and efficient conduction of electrical current. In some embodiments, the electrooxidation reactor may comprise a combination of anodes covered with MMO and BDD. The cathodes are generally uncovered. In particular, the outer surfaces of the outermost electrodes of the electrooxidation reactor, which can be anodes or cathodes, may have an outer frame covered with a MMO layer and its center area is covered with the titanium dioxide. The MMO frame allows increasing the transmission of the electrical current towards the center of the plate where the TiO₂ is deposited, ensuring an adequate distribution of the electrical charge in the entire outer surfaces of the outermost electrodes of the electrooxidation reactor, which contributes to minimize the recombination of the electron-holes pairs.

The PEC reactor also comprises a first UV light source located on a first side of the electrooxidation reactor and facing the outer side surface of the first outermost electrode of the electrooxidation reactor. In other words, the first UV light source faces the outer surface of the electrode that is covered with the titanium dioxide. The first UV light source comprises a plurality of UV light emitting diodes (LEDs) arranged so as to illuminate the outer side surface of the first outermost electrode. In this way, the titanium dioxide is activated by the UV light source inducing the generation of the electron-holes pairs and of oxidizing species (mainly, hydroxyl and superoxide radicals) and the photocatalytic decomposition of the organic compounds exposed to it. Preferably, the first UV light source is a laminar-shaped UV light source in which the plurality of the UV LEDs, that can be UV-A LEDs or a combination of UV-A and UV-C LEDs, are homogeneously distributed in such a way that it is ensured that the whole outer surface of the outermost electrode, that is covered with the titanium dioxide, is homogenously illuminated. Since an electric current is flowing through this outermost electrode, which has its outer side surface coated with titanium dioxide, the photocatalytic effect is increased. This current flowing through the electrode covered with the titanium dioxide increments quantic efficiency of the photocatalytic process, minimizes recombination of electron-hole pairs and increases the amount of hydroxyl radicals generated and the decomposition rate of organic material in water.

The electrooxidation reactor defines a first reaction volume inside the reaction chamber in which, upon operation of the PEC reactor, electrooxidation is carried out. When the PEC reactor is being operated, a water flow circulates through the reactor chamber and an external electric potential difference (voltage) is applied to the electrodes of the electrooxidation reactor, which results in the oxidation of the organic material in the water and the formation of reactive species in the water. In particular, free-chlorine (Cl₂), oxygen (O₂), hydrogen peroxide (H₂O₂) and ozone (O₃) are generated in the water. Cl₂, H₂O₂ and O₃ are long-lasting disinfectant species with a medium disinfectant power. That is to say, while these oxidizing agents or species may remain in the water during hours continuing disinfecting it, their disinfecting power is not very high compared with other oxidizing agents. The oxidizing species generated by the electrooxidation reactor contribute to oxidize part of the organic material in the water.

In turn, the first ultraviolet light source and the outer side surface of the first outermost anode of the electrooxidation reactor define a second reaction volume inside the reaction chamber in which, upon operation of the PEC reactor, heterogeneous photocatalysis is carried out. Preferably, the first reaction volume and the second reaction volume are placed in parallel within the reaction chamber, so part of the water flow is subjected to the electrooxidation into the first reaction volume while the rest of the water is subjected to the photocatalysis into the second reaction volume. Heterogeneous photocatalysis is able to generate hydroxyl radicals and superoxide radicals, which are short-lasting oxidizing species with a very high disinfection power. In fact, hydroxyl radicals are extremely reactive and, after fluor, the most oxidizing agents (oxidation potential of 2.8V). Heterogeneous photocatalysis is also able to eliminate organic compounds from water which reduces the need of adding additional chorine to the water.

Preferably, the water flow that circulates inside the PEC reactor is recirculated, so it passes through the PEC reactor in a continuous manner in each cycle of the disinfection process. That means that the oxidizing agents generated in the electrooxidation reactor, which are long-lasting oxidizing agents, may pass through the second reaction volume in a next disinfecting cycle. The hydrogen peroxide generated in the electrooxidation reactor may be subjected to the heterogeneous photocatalysis process in a next disinfecting cycle which results in the generation of more hydroxyl radicals and superoxide radicals, multiplying their number, which in turn increments the disinfecting power of the PEC reactor.

Hence, the photoelectrocatalysis, that combines electrooxidation and heterogeneous photocatalysis, results in an improved sanitization process. It has been demonstrated that the combination of these technologies is capable of increase the water disinfection rate in up to a 75% with respect the use of these technologies in an isolated manner (this increase in the disinfection rate being measured based on COD and BOD reductions when compared to the same mass of contaminated water). On the one hand, electro-oxidation will oxidize the organic material in the water and generate oxidizing species that are long-lasting and have a medium disinfection power (Cl₂, O₂, H₂O₂ and O₃, among others). On the other hand, the UVA light source excites the TiO₂ for the heterogeneous photocatalytic process to take place. Heterogeneous photocatalysis generates superoxide radicals and hydroxyl radicals, which have a short lifetime but a very high disinfecting power, while decomposing organic matter. The passage of an electric current though the outermost electrodes of the electrooxidation reactor, whose outer surface is covered with the titanium dioxide, reduces the recombination rate of the electron-hole pairs which increases the generation of hydroxyl radicals. Besides, the H₂O₂ generated in the electrooxidation reactor can be recirculated into the second chamber so it is transformed by the heterogeneous photocatalysis into superoxide radicals and hydroxyl radicals which increases the overall disinfecting power of the PEC reactor. Additionally, the photoelectrocatalysis is capable of acting on a wider spectrum of microorganisms, including chlorine resistant bacteria such as mycobacterium, bacillus, legionella, pseudomonas and sphingomonas, among others, killing and decomposing them, which results in a more versatile PEC reactor.

By adequately dimensioning the first reaction volume and the second reaction volume, the proportion of water subjected to the electrooxidation or to the photocatalysis can be adjusted.

In some embodiments, the PEC reactor comprises a second UV light source located on a second side of the electrooxidation reactor, the second side being opposite to the first side of the electrooxidation reactor. The second UV light source comprises a second plurality of UV LEDs arranged so as to illuminate the outer side surface of the second outermost electrode of the electrooxidation reactor. This second outermost electrode is arranged opposite to the first outermost electrode of the electrooxidation reactor and the outer side surface of said second outermost electrode is also covered with titanium dioxide. This titanium dioxide has been also previously deposited by a technique selected from a list comprising PVD, SOL-GEL deposition, thermal spray deposition, CVD and ALD. Preferably, this titanium dioxide will be physical vapor deposited titanium dioxide. In turn, the second ultraviolet light source and the outer side surface of the second outermost electrode define a third reaction volume wherein, upon operation of the PEC reactor, heterogeneous photocatalysis is also carried out. Incorporating this third reaction volume, the disinfection power of the PEC reactor is increased since a greater amount of water can be subjected to the heterogeneous photocatalysis process. As previously explained, this third reaction volume will allow to apply heterogeneous photocatalysis to a larger amount of water and the generation of a larger amount of superoxide radicals and hydroxyl radicals generated by this second photocatalytic reactor by itself and from the hydrogen peroxide previously generated by the electrooxidation reactor. Using a PEC reactor having only the second reaction volume or having the second and third reaction volumes may depend on the degree of disinfection required for the particular application, e.g., treatment of wastewater from the food industry, washing of various vegetables and fruits, etc.

In some embodiments, the plurality of alternated laminar-shaped electrodes are planar laminar-shaped electrodes, preferably rectangular shaped, arranged parallel to each other. Alternatively, the plurality of alternated laminar-shaped electrodes may be circular laminar-shaped electrodes, preferably cylindrical shaped, arranged coaxially. In other words, the electrooxidation reactor may be formed by a set of planar electrodes arranged in parallel, or it may be formed by a set of laminar electrodes arranged coaxially. In those embodiments in which the electrooxidation reactor comprises a set of planar electrodes, these electrodes may define a substantially cubic inner space through which the water flows. In those embodiments in which the electrooxidation reactor comprises a set of cylindrical electrodes, the reaction chamber may define a substantially cylindrical inner space through which the water flows.

In some embodiments, the alternated laminar-shaped electrodes substantially extend along the longitudinal and radial or transversal axes of the reaction chamber. Preferably, the alternated laminar-shaped electrodes may extend along the longitudinal axis of the reaction chamber while their extension in the radial or transversal axis may be conditioned for the presence of the second and third reaction volumes. In this way, the space occupied by the alternated laminar-shaped electrodes is maximized so the efficiency of the electrooxidation process can be maximized too.

In some embodiments, the PEC reactor comprises an injector or set of injectors arranged at the lower portion of the reactor chamber and being configured to inject ozone and/or oxygen inside the second reaction volume. When there is a third reaction volume, these injectors may also inject ozone and/or oxygen inside this third reaction volume. Ozone has germicidal properties while oxygen promotes generation of hydrogen peroxide and hydroxyl and superoxide radicals. Preferably, the oxygen concentration in the second and third reaction volumes will be between 1 and 5 g/l to promote the generation of the hydrogen peroxide and hydroxyl and superoxide radicals.

In some embodiments, the water inlet and the water outlet are disposed at opposite ends of the reaction chamber, the water inlet and water outlet defining a water flow path along the reactor chamber. Preferably, the water inlet may be disposed in the bottom wall of the PEC reactor and the water outlet may be located in the top wall of the PEC reactor, so water flows through the reaction chamber along its entire length. This specific disposition of the water inlet and outlet ensures that there are no air chambers inside the reaction chamber.

In some embodiments, the PEC reactor comprises a pre-chamber located between the water inlet and the reaction chamber, and a post-chamber located between the reaction chamber and the water outlet. The pre-chamber is configured to divide and distribute the water flow so it homogenously enters the first, second and third reaction volumes. The post-chamber is configured to mix homogenize and direct water coming from the first, second and third reaction volumes towards the water outlet.

In some embodiments, the UV LEDs of the UV light sources are UV-A LEDs or a combination of UV-A LEDs with UV-C LEDs. UV-A LEDs, that emit radiation of wavelengths between 315-400 nm, present a higher disinfecting power since UV-A light promotes the heterogenous photocatalytic process. UV-C LEDs, that emit radiation of wavelengths between 100-280 nm, present a higher germicide power since they promote photooxidation. Preferably, the UV-A LEDs will be selected to operate with wavelengths ranging from 340 to 387 nm. This wavelength range increases activation of the titanium dioxide maximizing the efficiency of the heterogenous photocatalytic process. This allows to broaden the spectrum of action on different types of contaminants, including fungi, yeasts, spores and chlorine resistant bacteria such as mycobacterium, bacillus, legionella, pseudomonas y sphingomonas, among others. Preferably, the intensity of the light emitted by UV-LEDs can be modified by connecting them to a regulable power source so the photocatalytic reactions can be also regulated.

In some embodiments, the titanium dioxide comprises anatase in a percentage between 60-75% in weight and rutile in a percentage of 40-25% in weight. Preferably, the titanium dioxide comprises a 70% of anatase and a 30% of rutile. Anatase generally has a better photocatalytic efficiency and quantum yield, because it has a higher active surface area and density of active sites in surface for adsorption of substances and catalysis.

In some embodiments, the PEC reactor may comprise a heat sink externally coupled to the reaction chamber. This heat sink may be located in correspondence with the corresponding UV light source and may be configured to dissipated heat generated by the plurality of UV LEDs. By placing a heat sink to dissipate the heat generated by each one of the UV light sources of the PEC reactor, the operational life of the LEDs can be extended. Alternatively, or in combination, a forced ventilation system may be externally coupled to the PEC reactor in correspondence with the UV light sources. For example, a set of fans may be externally attached to the PEC reactor and oriented so as to remove heat emitted by the UV light sources towards the outside of the PEC reactor.

In some embodiments, the heat sink may comprise a set of longitudinal dissipation fins arranged parallel to each other that substantially extends along a longitudinal axis of the reaction chamber. The dimensions of the heat sink, and in particular of the set of fins, may be adjusted to the dimensions of the corresponding UV light source to more efficiently dissipate the heat generated by the LEDs.

In some embodiments, the PEC reactor comprises a cleaning system for the electrooxidation reactor. This cleaning system may comprise a set of scrapers adapted to move along a longitudinal axis of the reactor chamber and are configured to scrap an outer surface of the anodes and cathodes removing deposited limescale from them. These scrapers may be actuated by an engine external to the PEC reactor that may periodically activate the scrapers to remove limescale from the outer surfaces of the electrodes without damaging the surfaces of the electrodes.

In some embodiments, the distance between the outer side surface of each outermost anode of the electrooxidation reactor and the corresponding UV light source is in a range between 10-20 mm and, preferably, the distance is 15 mm. Placing the outer side surface of each outermost anodes 15 mm from the corresponding UV light sources the use of the emission potential of the UV light sources is maximized.

In some embodiments, the UV LEDs are configured to emit UV light with wavelengths in a range of 340-380 nm and preferably, with a wavelength of 370nm.

In some embodiments, the first outermost electrode of the electrooxidation reactor is an anode and the second electrode of the electrooxidation reactor is a cathode, or vice versa. Besides, the electrooxidation reactor is configured to operate in polarity reversal. This allows removing deposited calcium carbonate scale from the cathodes, which improves performance of the electrooxidation reactor.

In some embodiments, the PEC reactor comprises a borosilicate glass layer or a quartz glass layer between each UV light source and the corresponding outer surface of the outermost electrode of the electrooxidation reactor. These glass layers filter the radiation emitted by the UV light sources allowing only certain wavelengths to pass through. By placing these glass layers the transmission of the appropriate wavelength can be increased up to a 10-15% without interfering with the titanium dioxide.

In some embodiments, the PEC reactor comprises a first power source configured to feed the electrooxidation reactor and a second power source configured to feed the UV light sources. The power delivered by each one of these two power sources can be modulated so the electrooxidation and photocatalytic processes can be regulated depending on the particular requirements of the water disinfecting process.

A second aspect of the present disclosure refers to a system for sanitizing water that comprises a hydraulic pump for pumping water to be sanitized through the system, a plurality of sensors (that may be individual sensors or a multiparametric probe comprising said sensors) to monitor quality parameters of the water, a PEC reactor as previously disclosed and a purge mechanism to drain the system. This system may comprise a tank containing the water to be sanitized from which the water is recirculated through the system. The sensors may be pH sensors, conductivity sensors, dissolved oxygen sensors, temperature sensors and turbidity sensors, among many others.

A third aspect of the present disclosure refers to a method for sanitizing a water mass. The method comprises the steps of:
receiving a continuous flow of water to be sanitized through a water inlet of a reaction chamber of a PEC reactor, wherein the continuous flow of water is received at a flow rate ranging from 3 to 20 m³/hour, preferably between 4 to 10 m³/hour, and the water has a conductivity greater than 150 µS/cm, preferably between 150 and 350 µS/cm. The reaction chamber further comprises a water outlet;
subjecting part of the water flow to an electrooxidation process as the part of the water flow passes through a first reaction volume defined by an electrooxidation reactor that is arranged inside the reactor chamber; and
simultaneously subjecting the rest of the water flow to a heterogeneous photocatalysis process as the rest of the water flow passes through a second reaction volume defined by a first UV light source and an outer side surface of a first outermost electrode of the electrooxidation reactor.

The electrooxidation reactor comprises a plurality of alternated laminar-shaped electrodes connected to a current source, wherein a current density of the electrodes is between 5 150 and 350 A/m3, the outer side surface of the first outermost electrode of the electrooxidation reactor is covered with titanium dioxide. The titanium dioxide has been previously deposited by a technique selected from a list comprising physical vapor deposition, SOL-GEL deposition, thermal spray deposition, chemical vapor deposition, and atomic layer deposition, preferably, the titanium dioxide is deposited by the physical vapor deposition technique. The first UV light source is arranged on a first side of the electrooxidation reactor and facing the outer side surface of the first outer outermost electrode of the electrooxidation reactor. Additionally, the first UV light source comprises a plurality of UV LEDs arranged so as to illuminate the outer side surface of the first outermost electrode of the electrooxidation reactor.

The PEC reactor may comprise a third reaction volume defined by a second UV light source located on a second side of the electrooxidation reactor, the second side being opposite to the first side of the electrooxidation reactor. This second UV light source is arranged facing an outer surface of a second outermost electrode of the electrooxidation reactor that is opposite to the first outermost electrode, the outer surface being covered with titanium dioxide. This titanium dioxide has been previously deposited by a technique selected from a list comprising PVD, SOL-GEL deposition, thermal spray deposition, CVD and ALD. Preferably, this titanium dioxide will be physical vapor deposited titanium dioxide. For such embodiments, the method further comprises simultaneously subjecting another part of the water flow to a heterogeneous photocatalysis process as this another part of the water flow passes through the third reaction volume.

In some embodiments, the method comprises recirculating the continuous flow of water through the photoelectrocatalytic reactor as many times as needed to reach the required quality standard for the treated water.

The solution herein disclosed presents some advantages over other existing solutions. It is able to significantly improve the water disinfection process by simultaneously combining electrooxidation and heterogeneous photocatalysis inside the same PEC reactor and without adding chemical products (minimizing chlorates generation) to the water. More particularly, the solution herein disclosed is able to increase the efficiency of the overall disinfection process, increase the organic compounds removal resulting in a higher water reuse rate and is able to operate with water with low salinity rates (lower than 1gr/L). Besides, the PEC reactor is a modular reactor easy to tailor to fulfill needs of multiple types of disinfection systems in which it may be installed. It is also more efficient in energy consumption by regulating the power with which the UV light sources and the electrooxidation reactor are feed.

The PEC reactor herein disclosed can increase the generation of hydroxyl radicals by transforming part of the hydrogen peroxide generated in the first reaction volume in hydroxyl radicals in the second and third reaction volumes. In addition, by using titanium dioxide, deposited with one of the techniques previously enumerated, as photocatalyst, current densities above 150 A/m³, preferably above 250 A/m³, can be applied which allows to work with low salinity waters (i.e. water with conductivities between 150-350 microSiemens/cm). By combining photoelectrocatalysis with UV-C light the PEC reactor is able to attack a wider spectrum of microbiological families, including fungi, yeasts, spores and chlorine resistant bacteria such as mycobacterium, bacillus, legionella, pseudomonas y sphingomonas, among others.

### BRIEF DESCRIPTION OF THE DRAWINGS

To complete the description and in order to provide for a better understanding of the disclosure, a set of drawings is provided. Said drawings form an integral part of the description and illustrate an example of the disclosure, which should not be interpreted as restricting the scope of the disclosure, but just as an example of how the disclosure can be carried out.

The drawings comprise the following figures:
Figure 1A shows a perspective view of a PEC reactor, according to an embodiment of the present disclosure.
Figure 1B shows another perspective view of the PEC reactor of Figure 1A, according to an embodiment of the present disclosure.
Figure 1C shows a top view of the PEC reactor of Figures 1A-B, according to an embodiment of the present disclosure.
Figure 1D shows two different sides views and a front view of the electrooxidation reactor of the PEC reactor of Figures 1A-C, according to an embodiment of the present disclosure.
Figure 1E shows a cross section of the PEC reactor of Figures 1A-C along line A-A.
Figure 1F shows a cross-section view of the PEC reactor of Figures 1A-C along line B-B.
Figure 1G shows an exploded view of the PEC reactor of Figures 1A-C, according to an embodiment of the present disclosure.
Figure 1H shows the same exploded view of Figure 1G from another angle.
Figure 2A shows an exploded view of a PEC reactor including two UV light sources, according to an embodiment of the present disclosure.
Figure 2B shows a top view of the PEC reactor of Figure 2A.
Figure 2C shows a cross-section view of the PEC reactor of Figures 2A-B along line C-C.
Figure 3 shows a block diagram of a system for sanitizing water, according to an embodiment of the present disclosure.
Figure 4 shows a flow diagram of a method for sanitizing a water mass, according to an embodiment of the present disclosure.

### DESCRIPTION OF EXAMPLES

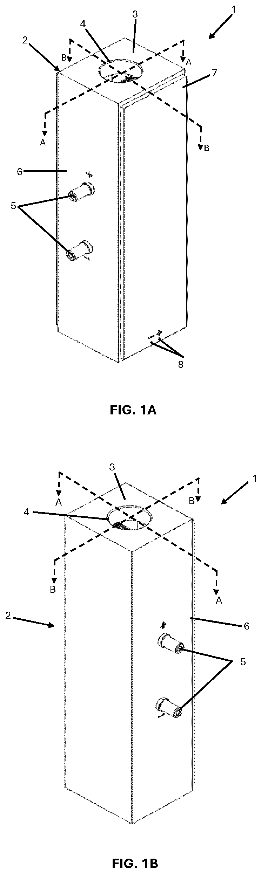

Figure 1A shows a perspective view of a PEC reactor 1, according to an embodiment of the present disclosure. It should be understood that the PEC reactor 1 depicted in Figures 1A-H may include additional components and that some of the components described herein may be removed and/or modified without departing from the scope of the example PEC reactor 1. Additionally, implementation of the PEC reactor 1 is not limited to such example.

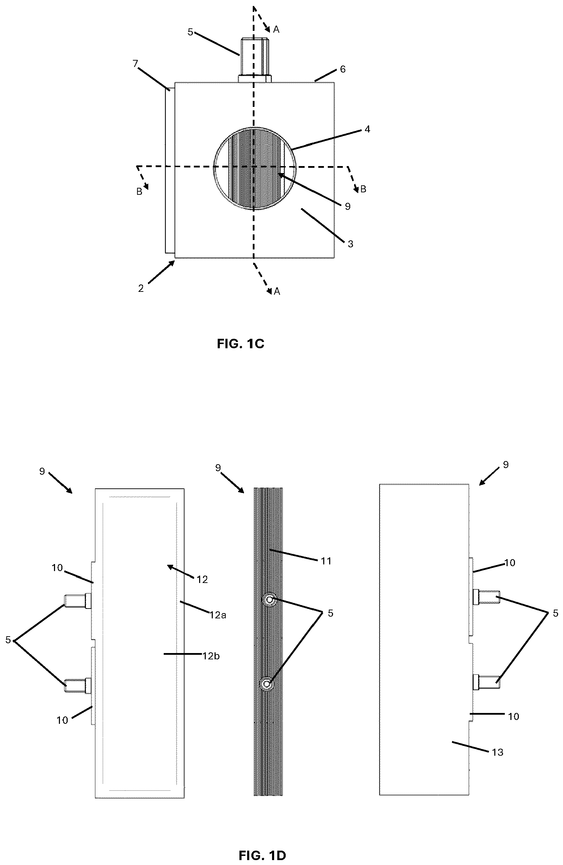

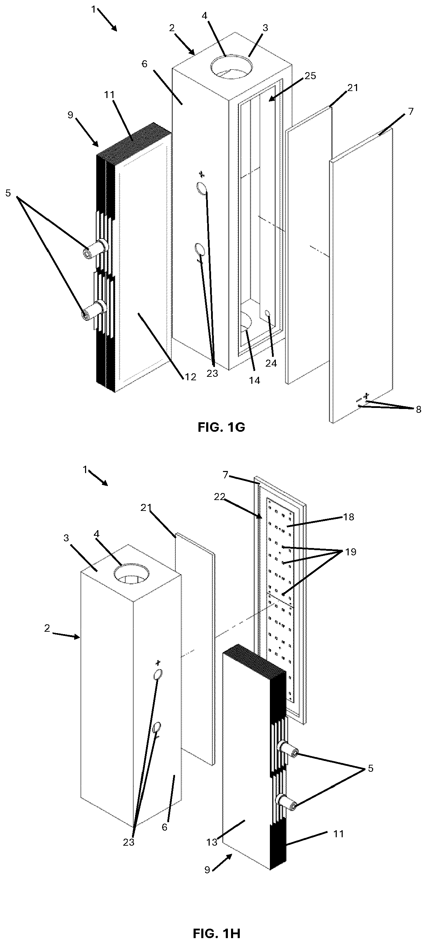

The PEC reactor 1 comprises a rectangular prism-shaped housing 2 inside of which the electrooxidation reactor (not shown in this figure, see Figure 1D) is located. This rectangular prism-shaped housing 2 delimits the reaction chamber of the PEC reactor 1. The upper wall 3 of the housing 2 has a circular through hole 4 that can act as the water inlet or water outlet of the PEC reactor 1. There is another circular through hole in the bottom wall (not shown in this figure) of the housing 2 that can also act as the water inlet or water outlet of the PEC reactor 1. The two circular through holes, located at the two opposite ends of the housing 2, define the water flow path along the reaction chamber. The UV light source (not shown in this figure see Figure 1H) may be a sheet the UV LEDs are attached to, and may be coupled, preferably with screws and washers, to the inner surface of the side wall 7.

Two electrical contacts 5 are placed in another side wall 6 of the housing 2. These two electrical contacts 5 are connected to the anodes and cathodes, respectively, of the electrooxidation reactor. The two electrical contacts 5 are, in turn, configured to be respectively connected to the positive and negative terminals of a power source (not shown) so an electrical current circulates through the anodes and cathodes for promoting the electrooxidation, so organic compounds in water are oxidized and oxidizing species are also generated into the water. Side wall 7, to the inner side of which the UV light source (not shown in this figure) is coupled, is removably coupled to housing 2 by means of washers and screws or any other coupling mechanism. Side wall 7 has two electrical connectors 8 to feed the UV light source located in correspondence with its lower portion. Side wall 6 may be also removably attached to the housing 2 by means of screws and washers or any other attaching mechanism.

Figure 1B shows another perspective view of the PEC reactor of Figure 1A, according to an embodiment of the present disclosure. It can be seen from Figure 1B that the rest of side walls of the housing are planar side walls that may be an integral part of the housing 2 (unlike side walls 6 and 9 which are, preferably, attachable and removable).

Figure 1C shows a top view of the PEC reactor 1 of Figures 1A-B, according to an embodiment of the present disclosure. The electrooxidation reactor 9 can be observed through the circular through hole 4 of the housing 2. In some implementations of the PEC reactor 1, there may be a heat sink coupled to the outer surface of the side wall 7 and placed in correspondence with the UV light source, this heat sink may be configured to conduct and dissipate the heat generated by the UV LEDs of the UV light source. The heat sink may be made of a high thermal conductivity material, such as copper or aluminum. Alternatively, instead of the heat sink, one or more fans may be coupled to the outer surface of the side wall 7 and may be oriented so as to create an air flow that dissipates the heat generated by the UV light source.

Figure 1D shows two different sides views and a front view of the electrooxidation reactor 9 of the PEC reactor 1 of Figures 1A-C, according to an embodiment of the present disclosure. The electrical connectors 5 are connected to respective plates 10 (the front view does not include these plates 10) which are, in turn, connected to the anodes and cathodes, respectively, of the electrooxidation reactor 9. The electrooxidation reactor 9 may comprise fasteners to correctly positioning the electrodes 11 of the electrooxidation reactor 9 and also to maintain the adequate separation between said electrodes 11. In this particular embodiment, the outer surface of the outermost electrode 12 of the electrooxidation reactor 9 is covered with titanium dioxide while the outer surface of the opposite outermost electrode 13 does not comprise titanium dioxide. The outer surface of the outermost electrode 12 of the electrooxidation reactor 9 is shown with an MMO deposited frame 12a and a central area 12b that is covered with the physically vapour deposited titanium dioxide.

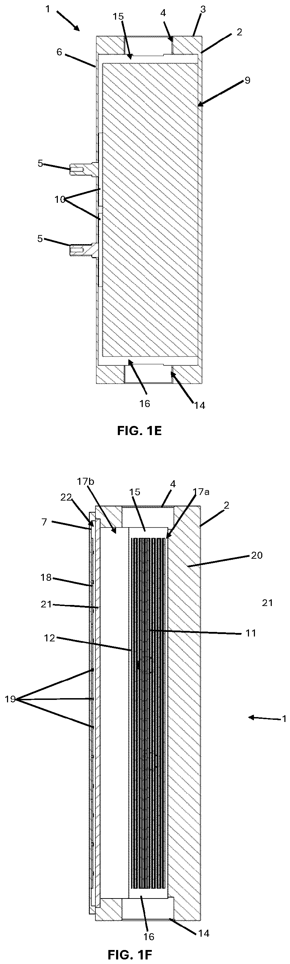

Figure 1E shows a cross section of the PEC reactor 1 of Figures 1A-C along line A-A, according to an embodiment of the present disclosure. This figure depicts the two circular through holes 4,14 though which water can enter and exit the reaction chamber 25 which is, in turn, delimited by shape and geometry of the housing 2. This embodiment also depicts the pre-chamber 16 which is configured to receive and distribute the water coming from the water inlet 14 towards the first 15 and second 17 reaction volumes, and the post-chamber 15 which is configured to receive the water from the first 15 and second 17 reaction volumes and to mix and direct it towards the water outlet 4. The pre-chamber 16 and the water inlet 14 may act as the post-chamber 15 and water outlet 4, respectively, and vice versa.

Figure 1F shows a cross section of the PEC reactor 1 of Figures 1A-C along line B-B, according to an embodiment of the present disclosure. This figure depicts the first reaction volume 17a, which is delimited by the electrooxidation reactor 9, formed by the plurality of electrodes 11 placed parallel to each other, and the second reaction volume 17b which is delimited by the outer surface of the outermost electrode 12 of the electrooxidation reactor 9 and the UV light source 18, more particularly the borosilicate glass sheet or a quartz glass sheet 21 in this embodiment, that is coupled, by means of screws and washers, to the inner surface of the side wall 7. The UV light source 18 has a set of UV LEDs 19, preferably UV-A LEDs or a combination of UV-A LEDs and UV-C LEDs, distributed throughout the length and breadth of the UV light source 18 in order to homogeneous illuminate the outer surface of the outermost electrode 12 of the electrooxidation reactor 9 to activate the titanium dioxide deposited thereon.

In this particular embodiment, since the electrooxidation reactor 9 is centered inside the reaction volume 25 defined by the housing 2, the side wall 20 located at the side of housing 2 placed opposite to the UV light source 18 has been made thicker to directly contact the electrooxidation reactor 9. In this way, all the water flow circulates between the electrodes 11 of the electrooxidation reactor 9 (first reaction volume 17a) or between the outer surface of the outermost electrode 12 of the electrooxidation reactor 9 and the UV light source 18 (second reaction volume 17b). In this figure it is also depicted a borosilicate glass sheet or a quartz glass sheet 21 that filters the wavelengths emitted by the UV light source 18 and also isolates the UV light source 18 from the reaction chamber 25 through which water circulates. The side wall 7, that has the UV light source 18 attached to its inner surface together with the glass sheet 21 will create a sub-chamber 22 where the UV light source 18 is confined and fluidly isolated from the reaction chamber. This glass sheet 21 prevents water to contact the UV light source 18, that integrates the UV LEDs 19 and the associated electronics and circuitry, and also filters the wavelengths emitted by the UV light source 18.

Figure 1G shows an exploded view of the PEC reactor 1 of Figures 1A-C and 1E-F, according to an embodiment of the present disclosure. The side wall 6 comprises two orifices 23 the connectors 5 pass through. To mount the PEC reactor 1, the electrooxidation reactor 9 is firstly introduced inside the reaction chamber 25 and then, the glass sheet 21 and the side wall 7 are coupled and fixed to the housing 2. The side wall located opposite to the wall 6 comprises at least one oxygen and/or ozone injector 24 located in correspondence with the lower portion of the second reaction chamber 17b. This injector 24 may be coupled to a pressurized oxygen or ozone source from which the oxygen or source may be feed to said second reaction chamber 17b. The PEC reactor 1 may also comprise sealing gaskets located between the housing 2 and the glass sheet 21 to avoid water leakages.

Figure 1H shows the same exploded view of the PEC reactor 1 of Figure 1G from a different angle. This figure shows the UV light source 18 coupled, e.g., screwed, to the inner surface of the side wall 7. The UV light source 18 comprises a plurality of UV LEDs 18, preferably UV-A LEDs or a combination of UV-A and UV-C LEDs disposed regularly on the surface of the laminar-shaped UV light source 18. This figure also depicts the sub-chamber 22 where the UV light source 18 is confined and fluidly isolated from the reaction chamber 25.

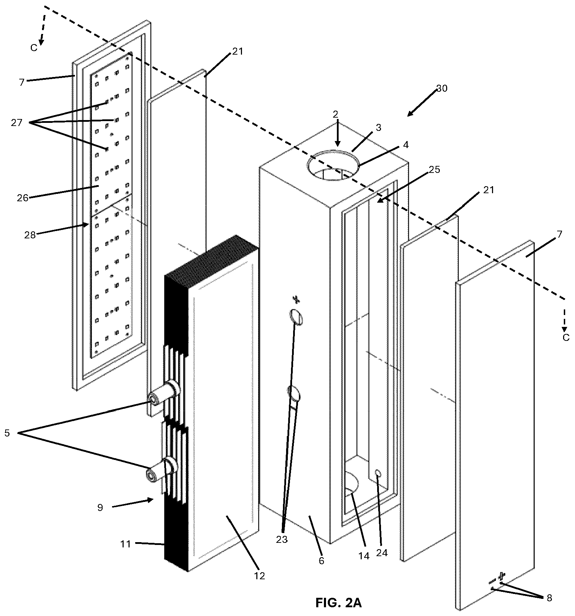

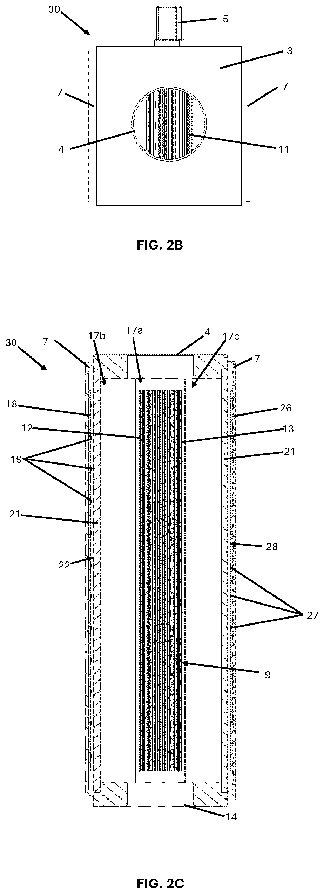

Figure 2A shows an exploded view of a PEC reactor 30 including two UV light sources 18,26, according to an embodiment of the present disclosure. The PEC reactor 30 is the same PEC reactor 1 of Figures 1A-1H, so the same numbering for the same elements than those shown in Figures 1A-H has been maintained but including a second UV light source 26 with its corresponding plurality of UV-A LEDs 27, glass sheet 21, subchamber 28 and side wall 7. While the PEC reactor 1 of Figures 1A-1H defined a first reaction volume 17a corresponding to the space occupied by the electrooxidation reactor 9, and a second reaction volume 17b defined by the existing space between the electrooxidation reactor 9 and the first UV light source 18, more particularly, between the outer surface of the outermost electrode 12 of the electrooxidation reactor 9 and the corresponding glass sheet 21, the PEC reactor 30 also defines a third reaction volume 17c (see Figure 2C) defined by the existing space between the electrooxidation reactor 9 and the second UV light source 26, more particularly, between the outer surface of the outermost electrode 13 of the electrooxidation reactor 9 and the corresponding glass sheet 21. The side wall located opposite to the wall 6 comprises at least one oxygen and/or ozone injector 24 located in correspondence with the lower portion of the second reaction chamber 17b and the third reaction chamber 17c, respectively. These injectors 24 may be coupled to a pressurized oxygen or ozone source from which the oxygen or source may be feed to said second and third reaction chambers 17b,17c.

Figure 2B shows a top view of the PEC reactor 30 of Figures 2A.

Figure 2C shows a cross-section view of the PEC reactor 30 of Figures 2A-B along line C-C. It is depicted the first reaction volume 17a where electrooxidation takes place and the second and third reaction volumes 17b, 17c where the heterogeneous photocatalysis happens. In this embodiment, there is one or two oxygen and/or ozone injectors (not shown in this figure) for each one of the second and third reaction volumes 17b, 17c.

Although not shown in any of the figures 1 or 2, the PEC reactor 1,30 may incorporate a mechanical cleaning system for the electrooxidation reactor 9. This cleaning system may comprise a set of scrapers configured to move along the longitudinal axis of the reaction chamber 25 for scrapping the outer surface of the electrodes 11 removing limescale deposits from them. These scrapers may be periodically actuated by an electric engine located outside the reaction chamber 25.

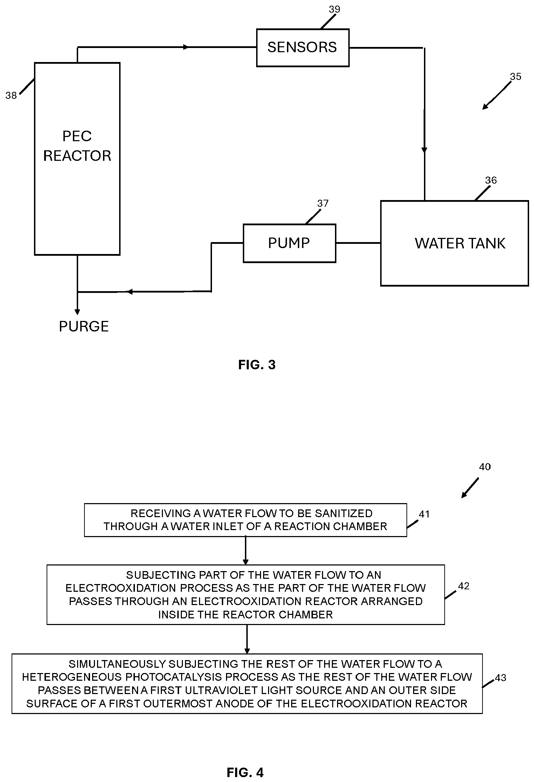

Figure 3 shows a block diagram of a system 35 for sanitizing water, according to an embodiment of the present disclosure. It should be understood that the system 35 depicted in Figure 3 may include additional components and that some of the components described herein may be removed and/or modified without departing from the scope of the example system 35. Additionally, implementation of the system 35 is not limited to such example.

The system 35 recirculates the water mass to be disinfected from a water tank 36 where it is stored. The water is pumped by a hydraulic pump 37 towards the inlet of the PEC reactor 38. This PEC reactor 38 may be, for example, the PEC reactors of Figures 1 or 2. Then, the water passes through a set of sensors 39 arranged in the hydraulic circuit. Alternatively, there may be a multiparametric probe that integrate all the sensors within one single measuring device. These sensors 39, which are configured to monitor the water quality, may be selected from a list comprising: pH sensors, conductivity sensors, dissolved oxygen sensors, temperature sensors, turbidity sensors, or combinations thereof, among many others. The system 35 also comprises a purge mechanism to expel part of the water if needed.

Figure 4 shows a flow diagram of a method 40 for sanitizing a water mass, according to an embodiment of the present disclosure.

At step 41 of the method 40, a water flow to be sanitized is received through the water inlet of a reaction chamber of a PEC reactor, e.g., as the PEC reactor shown in Figures 1 or 2. This reaction chamber will further comprise a water outlet through which water will exist once it has been subjected to the disinfection process. The water flow is received at a flow rate ranging from 3 to 20 m³/hour, preferably between 5 to 10 m³/hour, and the water has a conductivity greater than 150 µS/cm, preferably between 150 and 350 µS/cm.

At step 42 of the method 40, part of the water flow is subjected to an electrooxidation process as said part of the water flow passes through a first reaction volume defined by the electrooxidation reactor, more particularly as the water passes between the electrodes of the electrooxidation reactor, that is arranged inside the reactor chamber.
simultaneously subjecting the rest of the water flow to a heterogeneous photocatalysis process as the rest of the water flow passes through a second reaction volume defined by a first UV light source and an outer side surface of a first outermost anode of the electrooxidation reactor.

The electrooxidation reactor comprises a plurality of alternated laminar-shaped anodes and cathodes connected to a current source, the outer side surface of the first outermost anode of the electrooxidation reactor is covered with titanium dioxide and the first UV light source is arranged on a first side of the electrooxidation reactor and facing the outer side surface of the first outer outermost anode of the electrooxidation reactor. Additionally, the first UV light source comprises a plurality of UV LEDs arranged so as to illuminate the outer side surface of the first outermost anode of the electrooxidation reactor. The outer side surface of a first outermost electrode of the electrooxidation reactor is covered with titanium dioxide deposited by a technique selected from a list comprising physical vapor deposition, SOL-GEL deposition, thermal spray deposition, chemical vapor deposition, and atomic layer deposition. Preferably, the titanium dioxide is physical vapor deposited titanium dioxide, and the electrodes are configured to withstand a current density between 150 and 350 A/m³.

In some embodiments, the method further comprises recirculating the water mass through the PEC reactor as many times as necessary to reach the required water quality standard.

## Claims

1. A photoelectrocatalytic (PEC) reactor (1,30) for sanitizing water, the reactor (1,30) being **characterized in that** it comprises:
a reaction chamber (25) comprising a water inlet (14) and a water outlet (4) and being configured to receive a continuous flow of water to be sanitized at a flow rate ranging from 3 to 20 m³/hour, preferably between 5 to 10 m³/hour, the water having a conductivity greater than 150 µS/cm, preferably between 150 and 350 µS/cm;
an electrooxidation reactor (9) arranged inside the reaction chamber (25), wherein the electrooxidation reactor (9) comprises a plurality of alternated laminar-shaped electrodes (11) connected to a current source, wherein an outer side surface of a first outermost electrode (12) of the electrooxidation reactor (9) is covered with titanium dioxide deposited by a technique selected from a list comprising physical vapor deposition, SOL-GEL deposition, thermal spray deposition, chemical vapor deposition, and atomic layer deposition, preferably, the titanium dioxide is physical vapor deposited titanium dioxide, and the electrodes (11) being configured to withstand a current density between 150 and 350 A/m³; and
a first ultraviolet light source (18) located on a first side of the electrooxidation reactor (9) and facing the outer side surface of the first outer outermost electrode (12) of the electrooxidation reactor (9), the first ultraviolet light source (18) comprising a plurality of ultraviolet light emitting diodes (19) arranged so as to illuminate the outer side surface of the first outermost electrode (12);
wherein, the electrooxidation reactor (9) defines a first reaction volume (17a) in which, upon operation of the photoelectrocatalytic reactor (1), electrooxidation is carried out and the first ultraviolet light source (18) and the outer side surface of the first outermost electrode (12) define a second reaction volume (17b) in which, upon operation of the photoelectrocatalytic reactor (1), heterogeneous photocatalysis is carried out.

2. The photoelectrocatalytic reactor (1,30) according to claim 1, comprising a second ultraviolet light source (26) located on a second side of the electrooxidation reactor (9), the second side being opposite to the first side of the electrooxidation reactor (9), the second ultraviolet light source (26) comprising a second plurality of ultraviolet light emitting diodes (27) arranged so as to illuminate an outer side surface of a second outermost electrode (13) of the electrooxidation reactor (9), wherein the second outermost electrode is located opposite to the first outermost electrode of the electrooxidation reactor (9) and the outer side surface of the second outermost electrode (13) is covered with titanium dioxide deposited by a technique selected from a list comprising physical vapor deposition, SOL-GEL deposition, thermal spray deposition, chemical vapor deposition, and atomic layer deposition, preferably, the titanium dioxide is physical vapor deposited titanium dioxide, and wherein the second ultraviolet light source (26) and the outer side surface of the second outermost electrode (13) define a third reaction volume (17c) wherein, upon operation of the photoelectrocatalytic reactor, heterogeneous photocatalysis is carried out.

3. The photoelectrocatalytic reactor (1,30) according to claim 1 or 2, wherein the plurality of alternated laminar-shaped electrodes (11) are planar laminar-shaped electrodes, preferably rectangular-shaped, arranged parallel to each other, or are circular laminar-shaped electrodes, preferably cylindrical-shaped, arranged coaxially.

4. The photoelectrocatalytic reactor (1,30) according to any one of the preceding claims, wherein the alternated laminar-shaped electrodes (11) substantially extend along the longitudinal and radial axes of the reaction chamber (25).

5. The photoelectrocatalytic reactor (1,30) according to any one of the preceding claims, comprising an injector (24) arranged at the lower portion of the reactor chamber (25) and being configured to inject ozone and/or oxygen into the second reaction volume (17b), preferably, into the second and third reaction volumes (17b,17c).

6. The photoelectrocatalytic reactor (1,30) according to any one of the preceding claims, wherein the ultraviolet light emitting diodes (19,27) of the ultraviolet light sources (18,26) are ultraviolet-A light emitting diodes or a combination of ultraviolet-A light emitting diodes and ultraviolet-C light emitting diodes.

7. The photoelectrocatalytic reactor (1,30) according to any one of the preceding claims, wherein the titanium dioxide comprises anatase in a percentage between 60-75 in weight and rutile in a percentage of 25-40 in weight, wherein, preferably, comprises a 70% of anatase and a 30% of rutile in weight.

8. The photoelectrocatalytic reactor (1,30) according to any one of the preceding claims, comprising a heat sink externally coupled to the reaction chamber and in correspondence with the ultraviolet light source (18,26), the heat sink being configured to dissipated heat generated by the plurality of ultraviolet light emitting diodes (19,27).

9. The photoelectrocatalytic reactor (1,30) according to any one of the preceding claims, comprising a cleaning system for the electrooxidation reactor (9), the cleaning system comprising a set of scrapers configured to move along a longitudinal axis of the reaction chamber (25) and being configured to scrap an outer surface of the anodes and cathodes removing limescale deposits.

10. The photoelectrocatalytic reactor (1,30) according to any one of the preceding claims, wherein the ultraviolet light sources (18,26) are configured to emit ultraviolet light with wavelengths in a range of 240-380 nm and preferably, with a wavelength of 370nm.

11. The photoelectrocatalytic reactor (1,30) according to claim 2, wherein the first outermost electrode of the electrooxidation reactor (9) is an anode and the second outermost electrode of the electrooxidation reactor (9) is a cathode, or vice versa, and the electrooxidation reactor (9) is configured to operate in polarity reversal.

12. The photoelectrocatalytic reactor (1,30)according to any one of the preceding claims, comprising a borosilicate glass sheet or a quartz glass sheet (21) between each ultraviolet light source (18,26) and the corresponding outer surface of the outermost electrode (12,13) of the electrooxidation reactor (9).

13. A system (35) for sanitizing water, comprising:
a hydraulic pump (37) for pumping water to be sanitized through the system (35);
a plurality of sensors (39) to monitor quality parameters of the water;
a photoelectrocatalytic reactor (38) according to any one of claims 1 to 12; and
a purge mechanism to drain the system (35).

14. A method (40) for sanitizing a water mass, **characterized in that** it comprises the steps of:
receiving (41) a continuous flow of water to be sanitized through a water inlet of a reaction chamber of a photoelectrocatalytic reactor, the reaction chamber comprising the water inlet and a water outlet, wherein the continuous flow of water is received at a flow rate ranging from 3 to 20 m³/hour, preferably between 4 to 10 m³/hour, and the water has a conductivity greater than 150 µS/cm, preferably between 150 and 350 µS/cm;
subjecting (42) part of the water flow to an electrooxidation process as the part of the water flow passes through an electrooxidation reactor arranged inside the reactor chamber that defines a first reaction volume; and
simultaneously (43) subjecting the rest of the water flow to a heterogeneous photocatalysis process as the rest of the water flow passes between a first ultraviolet light source and an outer side surface of a first outermost electrode of the electrooxidation reactor, the first ultraviolet light source and the outer side surface of the first outermost electrode of the electrooxidation reactor defining a second reaction volume;
wherein the electrooxidation reactor comprises a plurality of alternated laminar-shaped electrodes connected to a current source, wherein a current density of the electrodes is between 150 and 350 A/m³,
wherein the outer side surface of the first outermost electrode of the electrooxidation reactor is covered with titanium dioxide that has been deposited by a technique selected from a list comprising physical vapor deposition, SOL-GEL deposition, thermal spray deposition, chemical vapor deposition, and atomic layer deposition, preferably, the titanium dioxide is deposited by the physical vapor deposition technique;
wherein the first ultraviolet light source is arranged on a first side of the electrooxidation reactor and facing the outer side surface of the first outer outermost electrode of the electrooxidation reactor; and
wherein the first ultraviolet light source comprises a plurality of ultraviolet light emitting diodes arranged so as to illuminate the outer side surface of the first outermost electrode of the electrooxidation reactor.

15. The method (40) for sanitizing water according to claim 14, comprising recirculating the continuous flow of water through the photoelectrocatalytic reactor.
